(19) Europäisches Patentamt
European Patent Office
Office européen des brevets

(11) Publication number: **0 404 945 A1**

(12) # EUROPEAN PATENT APPLICATION published in accordance with Art. 158(3) EPC

(21) Application number: **89905474.6**

(22) Date of filing: **18.01.89**

(86) International application number: **PCT/SU89/00013**

(87) International publication number: **WO 90/08152 (26.07.90 90/17)**

(51) Int. Cl.5: **C07F 9/24**, C07F 9/22, A01N 57/30, A61K 31/675, A61L 2/16

(43) Date of publication of application: **02.01.91 Bulletin 91/01**

(84) Designated Contracting States: **CH DE FR GB IT LI NL**

(71) Applicant: **KIEVSKY NAUCHNO-ISSLEDOVATELSKY INSTITUT EPIDEMIOLOGII I INFEKTSIONNYKH BOLEZNEI IMENI L.V.GROMASCHEVSKOGO**
**supusk Stepana Razina, 4**
**Kiev, 252038(SU)**

(72) Inventor: **RUDAVSKY, Vladimir Panteleimonovich**
**ul. Bazhova, 10-42**
**Kiev, 252100(SU)**
Inventor: **KHRISTICH, Antonina Ignatievna**
**pr. P.Tychiny, 21-113**
**Kiev, 252152(SU)**
Inventor: **BOLELAYA, Natalia Konstantinovna**
**ul. Bastionnaya, 5/13-70**
**Kiev, 252094(SU)**
Inventor: **PAKRYSH, Evgeny Fedorovich**
**ul. Kavkazskaya, 11-9**
**Kiev, 252035(SU)**
Inventor: **BOIKO, Leonid Danilovich**

**deceased(SU)**
Inventor: **MIKHNO, Ivan Leontievich**
**ul. Krasnoarmeiskaya, 57-21**
**Kiev, 252006(SU)**
Inventor: **TARAN, Valentina Vasilievna**
**ul. Draizera, 9v-126**
**Kiev, 252217(SU)**
Inventor: **TSUTSARIN, Vladimir Vasilievich**
**ul. Krakovskaya, 5-70**
**Kiev, 252100(SU)**
Inventor: **SHABLOVSKAYA, Evgenia Alexandrovna**
**ul. Pochaininskaya, 35-22**
**Kiev, 252070(US)**
Inventor: **STEPANCHUK, Valentin Andeevich**
**ul. Priozernaya, 12a-110**
**Kiev, 252211(SU)**
Inventor: **MATOSHKO, Galina Viktorovna**
**ul. Alexeevskaya, 2-37**
**Kiev, 252110(SU)**
Inventor: **GORELOV, Stanislav Anatolievich**
**ul. Tupoleva, 6-62**
**Kiev, 252049(SU)**
Inventor: **SADOVSKAYA, Nina Pavlovna**
**ul. Planerskaya, 2/26-1**
**Kiev, 252061(SU)**
Inventor: **KUZNETSOVA, Natalia Anatolievna**
**ul. Ivana Nekhody, 5-39**
**Kiev, 252141(SU)**
Inventor: **SKRIPKA, Ljudmila Ivanovna**
**Vozdukhoflotsky pr., 7-36**
**Kiev, 252049(SU)**
Inventor: **MELNIK, Mark Nikiforovich**
**ul. Engelsa, 30-32**
**Kiev, 252024(SU)**
Inventor: **BULGAKOV, Vsevolod Afanasievich**
**ul. Oktyabrskoi revoljutsii, 16-30**
**Kiev, 252021(SU)**
Inventor: **PONOMAREVA, Viktoria Efimovna**
**ul. Karla Marxa, 12-43**
**Kiev, 252001(SU)**
Inventor: **DANKO, Oleg Pavlovich**
**ul. Geroev Kosmosa, 1a-80**
**Kiev, 252148(SU)**

EP 0 404 945 A1

(74) Representative: **Ablewhite, Alan James et al**
**MARKS & CLERK 57/60 Lincoln's Inn**
**Fieldslds**
**London WC2A 3LS(GB)**

# (54) DERIVATIVES OF DICHLORANHYDRIDES OF AMIDOPHOSPHORIC ACIDS AND OF BACTERICIDAL, VIRICIDAL, INSECTICIDAL, OVOCIDAL AND FUNGICIDAL PREPARATIONS ON THEM.

R и R = OH, $OCH_3$, $OC_2H_5$, $OC_6H_5$,

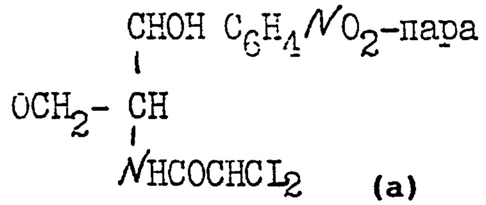

**(a)**

(57) The derivatives of dichloranhydrides of amidophosphoric acid have the general formula: para-$NO_2C_6H_{4CHXCH/CH2}$X'/NHPO/R/R', where X and X' = hydroxyl or chlorine, R and R' = OH, $OCH_3$, $OC_2H_5$, $OC_6H_5$, a compound of formula (a), $NHC_6H_5$; where R = $OCH_3$, $OC_2H_5$, $OC_6H_5$, $NHC_6H_5$, R' = OH. The claimed compounds have a biocidal activity and are the active substances of bactericidal, viricidal, insecticidal, ovocidal and fungicidal preparations based on them.

TITLE MODIFIED
see front page

# DERIVATIVES OF AMIDOPHOSPHORIC ACID DICHLORIDES AND BACTERICIDAL, VIRUCIDAL, INSECTICIDAL, OVOCIDAL AND FUNGICIDAL PREPARATIONS BASED THEREON

## Field of the Art

The present invention relates to organic chemistry and, more particularly, to novel compounds - derivatives of amidophosphoric acid dichlorides and to bactericidal, virucidal, insecticidal, ovocidal anf fungicidal preparations based thereon.

## Background of the Invention

Known in the art are various compounds possessing a biocidal activity and useful as actives principles of bactericidal, virucidal, insecticidal, ovocidal and fungicidal preparations based thereon.

Well known in the art is the used of a bactericidal and virucidal preparation incorporating sodium N-chlorobenzenesulphamide as an active principle. The preparation is used as a 1-3% aqueous solution for desinfection of premises, utensils, glass ware, hands, medical instruments, clothes, foodwastes, sanitary-and-hygienic equipment, human excrements (both fluid and dense) and the like. However, the use of this preparation is not always effective, since this compound is instable in aqueous solutions; it has a sharp noxious smell of chlorine, irritates skin, mucous membranes of eyes and breathing organs which is accompanied by itching and peeling of the skin, allergic sneezing, lacrimation, sharp paons in the eyes, headaches. All this restricts the use of this preparation, especially in pulmonological and other therapeutical institutions. In operation with this preparation, it is necessary to use means of protection of the breathing organs, the skin of hands, as well as special conditions for storage of the preparation, since it is decomposable in the light, releases free chlorine and loses its activity. The preparation also has

clearly pronounced corrosive properties.

Known in the art are various insecticidal preparations for controlling synantropic home insects. Thus, known is an insecticidal preparation containing an active principle - 0,0-dimethyl-/1-hydroxy-2,2,2-trichloroethyl/ /phosphonate (Chlorophos, Divon, Dilox, Trichlorfen). The preparation is used as a 0.1-0.3% aqueous solution, an aerosol ("Handbook on Pesticides", Moscow: Khimia Punlishing House, 1985).

This preparation is instable - it rapidly decomposes in the light and in an alkali medium under the effect of reducing agents and, to accomplish the desired effect, it is necessary to repeatedly use the preparation after 3 - 5 days. Application of this preparation is rather harmful for a humean being, since the preparation is toxic (the $LD_{50}$ for mice and rats is 225 - 1,200 mg/kg) and exhibits an irritating effect. A repeated use of the preparation is labour-consuming, takes a long time and is not always efficient, since insects acquire tolerance in respect of the preparation. Furthermore, after its application an unpleasant sharp noxious scent.

Also known in the art is an ovocidal preparation carbothion containing an active principle sodium N-methyldithiocarbamate dihydrate (Chemical Encyclopedic Dictionary, 1983, Moscow: Sovetskaya Entsyklopedia Publishing House, p.242). The preparation is applied as a 40% aqueous solution for soil sterilization to control soil pests (nematodes, microorganisms, insects) of vegetable and decorative plants and as a 25% aqueous solution for soil disinvasion. The preparation is used in combination with a stabilizing agent - a 1% tertiary amine. The preparation has a sharp unpleasant scent and irritates mucous membranes of the upper respiratory tract.

Known in the art is the use of a fungicidal preparation containing an active principle - 2,3-dichloronaphthoquinone-1,4 (phygon) for controlling phytopathogenic fungi on such farm plants as apple-trees, cherries, peaches,

legumes, tomatoes, rice ("Handbook on Pesticides", 1985, Moscow: Khimia Publishing House). This compound is substantially insoluble in water, sparingly soluble in acetone, benzene. It is available mainly as a 50% and 4% powder-like preparation with filler for disinfection of seeds. The preparation irritates mucous membranes and the skin, it is also of a toxic character.

## Disclosure of the Invention

The derivatives of amidophosphoric acids dichlorides and the bactericidal, virucidal, insecticidal, ovocidal and fungicidal preparations based thereon, according to the present invention, are novel and hitherto unknown from the literature.

The present invention is directed to the provision of novel compounds and preparations based thereon featuring a high bactericidal, virucidal, insecticidal, ovocidal and fungicidal activity, low-toxic, stable in storage and application, possessing no side effects, well-soluble in water and in other solvents, showing a broad range of action and obtained by a simple process.

The object of the present invention is accomplished by novel compounds, viz. derivatives of amidophosphoric acid dichlorides of the general formula:

para-$NO_2C_6H_4CHXCH/CH_2X'/NHPO/R/R'$,

wherein X, X' is hydroxy or chlorine;

R and R' = OH, $OC_6H_5$ , 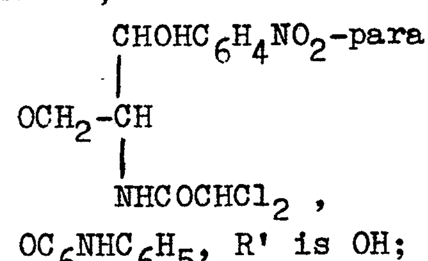

$NHC_6H_5$, where at R = $PCH_3$, $OC_2H_5$, $OC_6NHC_6H_5$, R' is OH; at R = R' = $OCH_3$, $OC_2H_5$, X = X' = CP or X = OH, X = Cl.

The novel compounds, according to the present invention have a high biocidal activity, a stable effect, a low toxicity (their $LD_{50}$ is within the range of from 400

to 2,000 mg/kg of the animal bodyweight), have no unpleasant odour, do not exhibit an irritation effect on the skin, mucous membranes of eyes and respiratory tracts, feature broad range of action and are active principles of bactericidal, virucidal, insecticidal, ovocidal and fungicidal preparations.

The bactericidal preparation, according to the present invention, incorporating an active principle and a solvent contains, as the active principle, derivatives of amidophosphoric acid dichlorides of the general formula:

$$para\text{-}NO_2C_6H_4CHXCH(CH_2X')NHPO(R)R',$$

wherein X and X' are each hydroxy or chlorine, R = R' = = OH.

The bactericidal preparation, according to the present invention, features a high activity, stability of its effect relative to gram-positive and gram-negative vegetative microorganisms, a low toxicity for warm-blooded animals; it does not have an unpleasant odour; its working concentrations do not produce an irritating effect on the skin, mucous membranes of eyes and respiratory tracts, or a sensitizing effect on the organism. The bactericidal preparation, according to the present invention, contains the active principle in the amount of 0.5 % by mass, as the solvent use is made of water.

The virucidal preparation comprising an active principle and a solvent contains, according to the present invention, as the active principle derivatives of amidophosphoric acid dichlorides of the general formula:

$$para\text{-}NO_2C_6H_4CHXCH(CH_2X')NHPO(R)R',$$

wherein X and X' = hydroxy or chlorine; R and R' = OH, $OC_6H_5$,

$CHOHC_6H_4NO_2$-para
|
$OCH_2$-CH
|
$NHCOCHCl_2$, $NHC_6H_5$; where at R = $OC_6H_5$,

$NHC_6H_5$, R' = OH; at R = R' = $OCH_3$, $OC_2H_5$, X = X' = Cl, or X = OH, X' = Cl.

The virucidal preparation, according to the present invention, has a high virucidal activity relative to viruses of hepatitis B, influenza; it produces no irritating effect on the skin and mucous membranes, has no unpleasant odour.

The virucidal preparation, according to the present invention, contains the active principle in a preferable amount of from 1 to 2 % by mass; as the solvent it preferably contains a 0.85% solution of sodium chloride.

The insecticidal preparation incorporating an active principle and a solvent contains, according to the present invention, as the active principle derivatives of amidophosphoric acid dichlorides of the general formula:

$$para\text{-}NO_2C_6H_4CHXCH(CH_2X')NHPO(R)R',$$

wherein X and X' are each hydroxy or chlorine; R and R' = = $OCH_3$, $OC_2H_5$; X = X' = Cl, or X = OH, X' = Cl.

The insecticidal preparation, according to the present invention, features a high activity, a stable effect, a low toxicity; it does not have an unpleasant odour and an irritating effect on the skin, mucous membranes of eyes and respiratory tracts. According to the present invention, the preparation preferably contains an active principle in an amount of from 1 to 3 % by mass and, as a solvent, it preferably contains a 5% aqueous solution of glucose or saccharose.

The ovocidal preparation, according to the present invention, comprising an active principle and a solvent contains, as said active principle, derivatives of amidophosphoric acid dichlorides of the general formula:

$$para\text{-}NO_2C_6H_4CHXCH(CH_2X')NHPO(R)R',$$

wherein X and X' are each hydroxy or chlorine,
R = R' = OH,

$$
\begin{array}{l}
\quad\; CHOHC_6H_4NO_2\text{-para} \\
\quad\;\; | \\
OCH_2CH \\
\quad\;\; | \\
\quad\; NHCOCHCl_2 ,
\end{array}
$$

where at R = $OCH_3$, $OC_2H_5$, $OC_6H_5$, R' = OH; at R = R' = $OCH_3$, $OC_2H_5$, X = X' = Cl, or X = OH, X' = Cl.

The ovocidal prepation, according to the present invention, contains the active principle preferably in the amount of 3 % by mass and as the solvent it preferably contains water.

The fungicidal preparation, according to the present invention, comprising an active principle and a solvent contains, as the active principle, derivatives of amidophosphoric acid dichlorides of the general formula:

$$para\text{-}NO_2C_6H_4CHXCH(CH_2X')NHPO(R)R',$$

wherein X and X' are each hydroxy or chlorine; R = R' = OH.

The fungicidal preparation, according to the present invention, preferably contains the active principle in an amount of from 0.05 to 0.1 % by mass and as the solvent it incorporates water.

The fungicidal preparation, according to the present invention, has a high activity, stability of action, a low toxicity, does not produce any irritating effect on the skin, mucous membranes of eyes and respiratory tracts.

## Best Mode for Carrying Out the Invention

The novel compounds, according to the present invention, viz. derivatives of amidophosphoric acid dichlorides comprise yellow crystalline substances with a fruit-wine odout; they are soluble in water, alcohols, acetone and other organic solvents.

In IR-spectra of the compounds, according to the present invention, the following absorption bands are characteristic: for NH 3,215 - 3,440 $cm^{-1}$; P=O 1,260 - 1,330 $cm^{-1}$; NMR $^{31}P$-spectrum 1.72 - 1.99 ppm;

UV-spectrum 240 - 241 nm.

The compounds, according to the present invention, exhibit bactericidal, verucidal, insecticidal, ovocidal and fungicidal activity. These properties of the compounds, according to the present invention, have been proven in biological experiments at addirect contact with solutions of preparations with bacteria, a virus-containing liquid, synantropic home insects, ovi of helminths and fungi. The preparations cause death of gram-positive and gram-negative vegetative microorganisms, home synantropic insects, enteroviruses, viruses of hepatitis B, influenza and the like, ovi and larvae of helminths causing diseases of human beings and animals.

All the compounds, according to the present invention, and preparations based thereon feature a high biocidal activity, a stable effect, a low toxicity; they do not possess an irritating effect on the skin and mucous membranes of eyes and respiratory tracts, have a wide range of action on various biolofical objects. The compounds, according to the present invention, are produced by a simple process.

The novel compounds, according to the present invention, - derivatives of amidophosphoric acid dichlorides are amidophosphoric acids and their ethers. They are obtained by reacting trichlorophosphazo-hydrocarbons with water or alcohols. To obtain amidophosphoric acids, trichlorophosphazo-hydrocarbons are reacted with water in the ratio of 1:3 in a solution of acetone; to obtain ether of amidophosphoric acids, trichlorophosphazo-hydrocarbons are reacted with alcohols in the ratio of 1:2; to obtain ethers of amidophosphoric acids, trichlorophosphazo-hydrocarbons are reacted with alcohols in the ratio of 1:1 in the presence of triethylamine, followed by treatment with water in the ratio of 1:2. The resulting reaction mixture is allowed to stand for a long time at room temperature in a solution of benzene. Then, a hydrochloric-acid salt of triethylamine and benzene are removed from the mixture. The desired product is obtained in the form of a yellow crystalline mass with a fruit-wine odour, well soluble in water, alcohols, acetone and other organic solvents.

For a better understanding of the present invention, some specific examples illustrating preparation of the novel compounds of this invention, preparations based thereon and tests of their activity are given hereinbelow.

Example 1

To a solution of 0.01 mol of trochlorophosphazo-1--para-nitrophenyl-1,3-propanediol in 20 ml of acetone 0.03 mol of water in 10 ml of acetone were gradually added under continuous stirring. The reaction mixture is allowed to stand for 24 hours at the temperature of 20 °C. The desired product was precipitated with evaporation of acetone in the form of a crystalline mass which was filtered-off, washed with ethyl ether, dried and crystallized from acetone to give the desired product 1-para-netrophenyl-1,3--propanediolamidophosphoric acid of the formula: para-$NO_2C_6H_4CHOHCH(CH_2OH)NHPO(OH)_2$ comprising a yellow crystalline mass soluble in water, alcohols, acetone. The yeild of the desired product was 75 % by mass. The melting temperature was 188 - 189 °C.

Found, %: C 36.98, H 4.30, N 9.44, O 38.50, P 10.57.

$C_9H_{13}N_2O_7P$.

Calculated, %: C 37.01, H 4.46, N 9.58, O 38.42, P 10.61.
IR-spectrum for NH 3,220 $cm^{-1}$, P=O 1,325 $cm^{-1}$;
NMR $^{31}P$-spectrum 1.99 ppm; UV-spectrum 240 nm.

The resulting compound exhibited a bactericidal activity. A bactericidal preparation was produced on the basis of this compound in the form of a 0.5% aqueous solution thereof. The bactericidal preparation, according to the present invention, was tested for its activity by the method of disinfection of white-calico test-objects and by the suspension method relative to standard reference strains of colibacillus and staphylococcus aureus. The experiments

were carried out with a protein load and therewithout. The white-calico test-objects inoculated with a suspension containing 2 bln. cells of colibacillus or staphylococcus aureus were placed into Petri dishes at the rate of two dishes for each exposure and consumption rate of the preparation of 0.5 ml per one test object. On completion of the exposure of the effect of the preparation on the microorganisms, the test-objects were rinsed in two sterile waters and introduced into a meat-peptone broth. The inoculates were placed into a thermostat at the temperature of 37 °C. The assessment of the results was effected 24 hours, 48 hours and 7 days thereafter to evaluate the differentiation between the bacteriostatic and bactericidal activity of the preparation. For comparison of the bactericidal activity, a similar experiment was conducted with sodium N-chlorobenzenesulphamide. The activity of the preparations was assessed by determining the availability of viable test microorganisms after each exposure of the effect of 0.5% concentration of the preparation. The test results are shown in Table 1 hereinbelow.

Example 2

The process was conducted in a manner similar to that described in Example 1. As the starting compound use was made of 0.01 mol of trichlorophosphazo-1-chloro-3-propanol; further steps were conducted as described in Example 1. The desired product thus obtained was 1-para-nitrophenyl-1-chloro-3-propanolamidophosphoric acid of the formula:

$$\text{para-}NO_2C_6H_4CHOHCH(CH_2Cl)NHPO(OH)_2$$

comprising a yellow crystalline mass soluble in water, alcohols, acetone. The yield of the desired product was 78 % by mass. The melting temperature was 159 - 160 °C.

Found, %: C 34.75, H 3.84, Cl 11.35, N 9.05, O 30.98, P. 10.00. $C_9H_{12}ClN_2O_6P$.

Calculated, %: C 34.80, H 3.87, Cl 11.42, N 9.05, O 30.98, P 10.00.

IR-spectrum for NH 3,215 $cm^{-1}$, P=O 1,320 $cm^{-1}$; NMR $^{31}P$-spectrum 1.74 ppm; UV-spectrum 240 nm.

The compound exhibited a bactericidal activity. Tests of a preparation based thereon were carried out in a manner similar to that described in Example 1 hereinabove. The test results are shown in Table 1 hereinbelow.

Example 3

The process was carried out in a manner similar to that of Example 1. As the starting compound use was made of 0.01 mol of trichlorophosphazo-1,3-dichloropropane, the further steps were as in Example 1. The thus-obtained desired product was 1-para-nitrophenyl-1,3-dichloropropanamidophosphoric acid of the formula:

$$para\text{-}NO_2C_6H_4CHClCH(CH_2Cl)NHPO(OH)_2$$

comprising a yellow crystalline mass soluble in water, alcohols, acetone. The yield of the desired product was 80 % by mass. The melting temperature was 164 - 165 °C.

Found, %: C 33.01, H 3.33, Cl 21.42, N 8.44, O 24.31, P 9.40. $C_9H_{11}Cl_2N_2O_5P$.

Calculated, %: C 32.91, H 3.35, Cl 21.52, N 8.48, O 24.38, P 9.42.

IR-spectrum for NH 3,250 $cm^{-1}$, P=O 1,330 $cm^{-1}$; NMR $^{31}P$-spectrum 1.72 ppm; UV-spectrum 2.41 nm.

The compound exhibited a bactericidal activity. Tests of a preparation based thereon were carried out as in Example 1. The test results are shown in Table 1 hereinbelow.

Example 4

To a solution of 0.02 mol of d(-)threo-1-para-nitrophenyl-2-dichloracetamido-1,3-propanediol and 0.02 mol of triethylamine in 30 ml of benzene 0.01 mol of 1-para-nitrophenyl-1,3-dihydroxypropylamidophosphoric acid dichloride in 20 ml of benzene were gradually added under continuous stirring. The reaction mixture was allowed to stand for

Table 1

Bactericidal Activity of the Preparation, According to the Present Invention, in Comparison with the Known Preparation Based on Sosium N-chlorobenzenesulphamide

| Preparation of | Efficiency of the preparation, % | |
|---|---|---|
| | Colibacillus | Staphylococcus aureus |
| Example 1 | 99.99 | 80 |
| Example 2 | 99.99 | 99.99 |
| Example 3 | 100 | 99.99 |
| Known bactericidal preparation | 100 | 99.99 |

24 hours at the temperature of 20 °C. The precipitated triethylamine hydrochloride was filtered-off. Benzene was distilled in vacuum. The remaining product in the form of a crystalline mass was sucked, washed with benzene, ether, dried and crystallized from ethanol. The thus-prepared desired product was di-[d(-)-threo-3-para-nitrophenyl-2-dichloracetamido-3-hydroxypropyl ether] d(+)-threo-1-para--nitrophenyl-1,3-dihydroxyisopropylamidophosphoric acid of the formula:

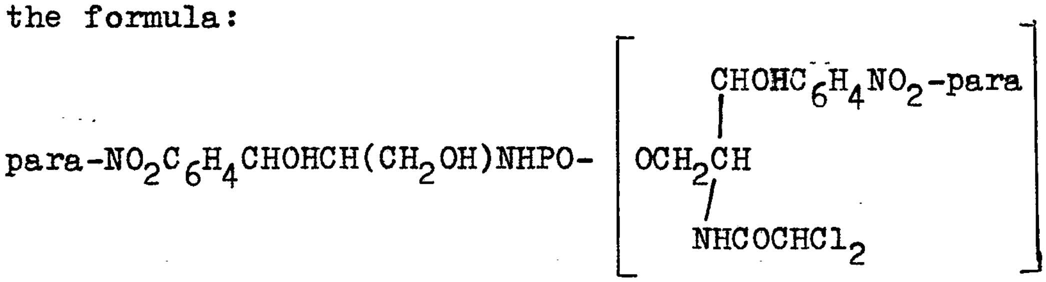

comprising a yellow crystalline mass soluble in water, alcohols, acetone. The yield of the desired product was 78 % by mass. The melting point was 132 - 134 °C.

Found, %: C 40.84, H 3.58, Cl 15.72, N 9.13, P 3.23.

$C_{31}H_{33}Cl_4N_6O_{15}P$.

Calculated, %: C 40.98, H 3.68, Cl 15.72, N 9.31, P 3.43. IR-spectrum for P=O 1,260 $cm^{-1}$, NH 3,440 $cm^{-1}$.

The resulting compound exhibited a virucidal activity. A virucidal preparation was prepared from this compound in the form of a 1% solution thereof in a 0.85% solution of sodium chloride. The virucidal effect of the preparation, according to the present invention, was studied in respect of the virus of hepatitis B and the virus of influenza, type A, ($H_1N_1$) causing the most wide-scale outbursts of viral infection diseases of human beings. To this end, to serum of an ill person or of a carrier of the virus of hepatitis B with the initial titre HBsAg 1:3-1:64 the virucidal preparation, according to the present invention was added. After a 30minutes's exposure the titre of NBsAg was determined following a well-known immunological procedure in sereal dilutions of antigene-antibody. The control samples of serum were added, instead of the test preparation, with a 0.85% solution of sodium chloride in an appropriate proportion. The test of the virucidal activity of the preparation, according to the present invention, in respect of the virus of hepatitis B was effected in comparison with a known preparation based on sodium N-chloro--benzenesulphamide.

The virucidal effect of the preparation, according to the present invention, in respect of the virus of influenza was studied in a similar manner: to a virus-containing allantoic liquid a 1% solution of the preparation of this invention was added and the titre of the virus was determined in a generally known manner - using a hemagglutination reaction. The study of the activity of the preparation, according to the present invention, was carried out in comparison with the known preparation mentioned hereinabove. The results of the tests of the virucidal activity of the preparation of the present invention are shown in Table 2 hereinbelow.

Example 5

The process was conducted in a manner similar to that described in the foregoing Example 4. As the starting compounds use was made of 1-para-nitrophenyl-1-hydroxy-3--chloroisopropylamidophosphoric acid dichloride and phenol;

the further steps were as in Example 4. The resulting desired product was diphenyl ether of 1-para-nitrophenyl-1--hydroxy-3-chloroisopropylamidophosphoric acid of the formula: para-$NO_2C_6H_4CHOHCH(CH_2Cl)NHPO(OC_6H_5)_2$ comprising a crystalline mass soluble in water, alcohols, acetone, The yield of the desired product was 81 % by mass. The melting temperature was 176 - 178 °C.

Found, %: C 54.30, H 4.29, Cl 7.69, N 5.99, P 6.72.

$C_{21}H_{20}ClN_2O_6P$.

Calculated, %: C 54.49, H 4.35, Cl 7.66, N 6.05, P 6.69. IR-spectrum for NH 3,350 $cm^{-1}$, P=0 1,290 $cm^{-1}$.

The compound exhibited a virucidal activity. Tests of a preparation based thereon relative to the virus of influenza, type A, was conducted in a manner similar to that described in Example 4 hereinbefore. The test results are shown in Table 2.

Example 6

The process was conducted in a manner similar to that described in Example 4. As the starting compounds use was made 1-para-nitrophenyl-1,3-dichloroisopropylamidophosphoric acid dichloride and phenol; the further steps were similar to those of Example 4. The resulting desired product was 1-para-nitrophenyl-1,3-dichloroisopropylamidophosphoric acid dichloride of the formula:
para-$NO_2C_6H_4CHClCH(CH_2Cl)NHPO(OC_6H_5)_2$ comprising a crystalline mass soluble in water, alcohols, acetone. The yield of the desired product was 82 % by mass. The melting temperature was 126 - 127 °C.

Found, %: C 52.36, H 3.83, Cl 14.60, N 5.77, P 6.28.

$C_{21}H_{19}Cl_2N_2O_5P$.

Calculated, %: C 52.40, H 3.98, Cl 14.73, N 5.82, P 6.44. IR-spectrum for NH 3,400 $cm^{-1}$, P=0 1,310 $cm^{-1}$.

The compound exhibited a virucidal activity. Tests of a preparation based thereon relative to the virus of influenza, type A, were carried out in a manner similar to that

described in Example 4 hereinbefore. The test results are shown in Table 2 hereinbelow.

Example 7

The process was conducted in a manner similar to that described in Example 4 hereinbefore. As the starting compounds use was made of 1-para-nitrophenyl-1-hydroxy-3--chloroisopropylamidophosphoric acid dichloride and aniline; further steps were as in Example 4. The thus-prepared desired product was 1-para-nitrophenyl-1-hydroxy-3-chloroisopropylamidophosphoric acid dianilide of the formula:
para-$NO_2C_6H_4CHOHCH(CH_2Cl)NHPO(NHC_6H_5)_2$ comprising a crystalline mass soluble in water, alcohols and acetone. The yield of the desired product was 87 % by mass. The melting temperature was 202 - 204 °C.

Found, %: C 54.79, H 4.77, Cl 7.73, N 12.17, P 6.68.
$C_{21}H_{22}ClN_4O_4P$.
Calculated, %: C 54.73, H 4.81, Cl 7.69, N 12.15, P 6.72.
IR-spectrum for NH 3,430 $cm^{-1}$, P=O 1,260 $cm^{-1}$.

The compound exhibited a virucidal activity. Tests of a preparation based thereon relative to the virus of influenza, type A, were conducted in a manner similar to that described in Example 4 hereinbefore. The results of the tests are shown in Table 2 hereinbelow.

Example 8

The process was conducted in a manner similar to that of Example 4. As the starting compound use was made of 1-para-nitrophenyl-1,3-cichloroisopropylamidophosphoric acid dichloride and aniline; further steps were as in Example 4. The thus-prepared desired product was 1-para--nitrophenyl-1,3-dichloroisopropylamidophosphoric acid dianilide of the formula:
para-$NO_2C_6H_4CHClCH(CH_2Cl)NHPO(NHC_6H_5)_2$ comprising a crystalline mass soluble in water, alcohols and acetone. The yield of the desired product was 84 % by mass. The melting temperature was 115 - 116 °C.

Found, %: C 52.49, H 4.37, Cl 14.73, N 11.73, P 6.42.

$C_{21}H_{21}Cl_2N_4O_3P$.

Calculated, %: C 52.62, H 4.42, Cl 14.79, N 11.69, P 6.46.

IR spectrum for NH 3,440 $cm^{-1}$, P=O 1,270 $cm^{-1}$.

The compound exhibited a virucidal activity. Tests of a preparation based thereon relative to the virus of influenza, type A, were carried out as in Example 4. The test results are shown in Table 2 hereinbelow.

Example 9

To a solution of 0.01 mol of trichlorophosphazo-1-para-nitrophenyl-1-chloro-3-propanol in 20 ml of benzene 0.01 mol of aniline and 0.01 mol of triethylamine in 20 ml of benzene were gradually added under a continuous stirring. The reaction mixture was allowed to stand for 24 hours at the temperature of 20 °C. The precipitated triethylamine chloride was sucked. Benzene was distilled-off in vacuum. The remaining product in the form of a thick liquid 0.01 mol of water in acetone was added and allowed to stand at the temperature of 20 °C for 20 hours. The precipitated crystals were sucked, washed with ether, dried and crystallized from ethanol. The thus-prepared desired product was 1-para-nitrophenyl-1-chloro-3-propanol-2-amidophosphoric acid monoanilide of the formula: para-$NO_2C_6H_4CHOHCH(CH_2Cl)NHPO(NHC_6H_5)OH$ comprising a crystalline mass soluble in water, alcohols and acetone. The desired product yield was 80 % by mass. The melting temperature was 103 - 105 °C.

Found, %: C 46.34, H 4.25, Cl 9.09, N 10.93, P 8.06.

$C_{15}H_{17}ClN_3O_5P$.

Calculated, %: C 46.70, H 4.44, Cl 9.19, N 10.89, P 8.03.

IR-spectrum for NH 3,350 $cm^{-1}$, P=O 1,290 $cm^{-1}$.

The compound exhibited a virucidal activity. Tests of a preparation based thereon in respect of the virus of influenza, type A, were carried out in a manner similar to that described in Example 4 hereinbefore. The results of the tests are shown in Table 2 hereinbelow.

Example 10

The process was conducted in a manner similar to that described in the foregoing Example 9. As the starting compounds use was made of trichlorophosphazo-1-para-nitrophenyl-1,3-dichloropropane and aniline. The thus-prepared desired product was 1-para-nitrophenyl-1,3-dichloropropan-2-amidophosphoric acid monoanilide of the formula: para-$NO_2C_6H_4CHClCH(CH_2Cl)NHPO(NHC_6H_5)OH$ comprising a crystalline mass soluble in water, alcohols and acetone. The desired product yield was 87 % by mass. The melting temperature was 112 - 114 °C.

Found, %: C 44.36, H 4.09, Cl 17.49, N 10.67, P 6.64.
$C_{15}H_{16}Cl_2N_3O_4P$.
Calculated, %: C 44.57, H 3.99, Cl 17.54, N 10.40, P 7.62.
IR-spectrum for NH 3,400 $cm^{-1}$, P=O 1,310 $cm^{-1}$.

The compound exhibited a virucidal activity. Tests of the preparation based on the compound in respect of influenza virus, type A, were carried out as in Example 4 hereinabove. The test results are shown in Table 2 hereinbelow.

Example 11

To 0.01 mol of trichlorophosphazo-1-para-nitrophenyl-1-chloro-3-propanol 20 ml of anhydrous methanol were gradually added under continuous stirring. The reaction mixture was allowed to stay for 24 hours at the temperature of 20 °C. The excess of the alcohol was distilled in vacuum. The remaining product in the form of a crystalline mass was sucked, washed with an alcohol, ether, dried and crystallized from methanol to give the desired product 1-para-nitrophenyl-1-chloro-3-propanolamidophosphoric acid dimethyl ether of the formula: para-$NO_2C_6H_4CHOHCH(CH_2Cl)NHPO(OCH_3)_2$ comprising a yellow crystalline mass soluble in water, alcohols and acetone. The yield of the desired product was 72 % by mass. The melting point 206 - 207 °C.

Found, %: C 39.00, H 4.87, Cl 10.32, N 8.11, P 9.11.
$C_{11}H_{16}ClN_2O_6P$.

Calculated, %: C 39.08, H 4.77, Cl 10.49, N 8.27, P 9.15. IR-spectrum for NH 3,240 $cm^{-1}$, P=0 1,280 $cm^{-1}$.

The compound possessed a virucidal activity. Tests of the preparation based thereon in respect of the virus of influenza, type A, were carried out as in Example 4 hereinabove. The test results are shown in Table 2 hereinbelow.

Example 12

The procedure of Example 11 was repeated. As the starting compounds use was made of 0.01 mol of trichlorophosphazo-1-para-nitrophenyl-1,3-dichloropropane, the further procedure was similar to that of Example 11 hereinabove. The resulting desired product was 1-para-nitrophenyl-1,3-dichloropropanamidophosphoric acid dimethyl ether of the formula: para-$NO_2C_6H_4CHCHCH(CH_2Cl)NHPO(OCH_3)_2$ comprising a yellow crystalline mass soluble in water, alcohols and acetone. The yield of the desired product was 71 % by mass. The melting point was 209 - 210 °C.

Found, %: C 37.00, H 4.19, Cl 20.01, N 6.30, O 22.27, P 8.88. $C_{11}H_{15}Cl_2N_2O_5P$.

Calculated, %: C 37.01, H 4,21, Cl 19.90, N 6.36, O 22.41, P 8.80.

IR-spectrum for NH 3,260 $cm^{-1}$, P=0 1,315 $cm^{-1}$.

The compound possesses a virucidal activity. Tests of the preparation in respect of the virus of influenza, type A, were carried out in a manner similar ti that described in Example 4 hereinbefore. The test results are shown in Table 2 hereinbelow.

Example 13

The process was conducted as in Example 11 hereinbefore. As the starting compounds use was made of 0.01 mol of trichlorophosphazo-1-para-nitrophenyl-1-chloro-3-propanol and 20 ml of ethanol; further steps were as in Example 11. The resulting desired product was 1-para-nitrophenyl-1-chloro-3-propanolamidophosphoric acid diethyl

ether of the following formula: para-$NO_2C_6H_4CHOHCH(CH_2Cl)NHPO(OC_2H_5)_2$ comprising a yellow crystalline mass soluble in water, alcohols and acetone. The yield of the desired product was 70 % by mass. The melting temperature was 182 - 185 °C.

Found, %: C 42.47, H 5.16, Cl 9.52, N 7.64, O 25.98, P 8.45. $C_{13}H_{20}ClN_2O_6P$.

Calculated, %: C 42.62, H 5.50, Cl 9.68, N 7.65, O 26.20, P 8.45.

IR-spectrum for NH 3,270 $cm^{-1}$, P=O 1,300 $cm^{-1}$.

The compound exhibited a virucidal activity. Tests of the preparation based on this compound relative to the virus of influenza, type A, were carried out in a manner similar to that described in Example 4 hereinbefore. The test results are shown in Table 2 hereinbelow.

Example 14

The process was conducted in a manner similar to that described in Example 11 hereinbefore. As the starting compounds use was made of 0.01 mol trichlorophosphazo-1-para-nitrophenyl-1,3-dichloropropane and 20 ml of ethanol; the further steps of the process were similar to those of Example 11. The desired product was 1-para-nitrophenyl-1,3-dichloropropanamidophosphoric acid diethyl ether of the formula: para-$NO_2C_6H_4CHCOCH(CH_2Cl)NHPO(OC_2H_5)_2$ comprising a yellow crystalline mass soluble in water, alcohols, acetone. The yield of the desired product was 72 % by mass. The melting temperature was 207 - 208 °C.

Found, %: C 40.58, H 5.04, Cl 18.38, N 6.12, O 20.62, P 8.50. $C_{13}H_{19}Cl_2N_2O_5P$.

Calculated, %: C 40.62, H 4.94, Cl 18.45, N 6.14, O 20.80, P 8.50.

IR-spectrum for NH 3,290 $cm^{-1}$, P=O 1,290 $cm^{-1}$.

The compound possessed a virucidal activity. Tests of the preparation based thereon in respect of the virus of

influenza, type A, were carried out in a manner similar to that described in Example 4 hereinbefore. The test results are shown in Table 2 hereinbelow.

Example 15

In a manner similar to that described in Example 1 hereinbefore 1-para-nitrophenyl-1,3-propanediolamidophosphoric acid was obtained. The compound exhibited a virucidal activity. Tests of the preparation based thereon were carried out as described in Example 4 in respect of the infectant of poliomyelitis. The test results are shown in Table 2 hereinbelow.

Example 16

In a manner similar to that described in Example 2 1-para-nitrophenyl-1-chloro-3-propanolamidophosphoric acid was obtained. The compound exhibited a virucidal activity. Tests of a preparation based thereon in respect of the infectant of poliomyelitis were carried out as described in Example 4 hereinbefore. The test results are shown in Table 2 hereinbelow.

Example 17

In a manner similar to that described in Example 3 1-para-nitrophenyl-1,3-dichloropropanamidophosphoric acid was obtained. The compound exhibited a virucidal activity. Tests of a preparation based thereon in respect of the infectant of poliomyelitis were carried out as described in Example 4 hereinbefore. The test results are shown in Table 2.

Example 18

In a manner similar to that described in Example 11 1-para-nitrophenyl-1-chloro-3-propanolamidophosphotic acid dimethyl ether was obtained.

The resulting compound exhibited an insecticidal activity. A preparation was prepared using it as a base which

Table 2

Virucidal Activity of the Compound of This Invention in Comparison with the Known Preparation Based on Sodium N-Chlorobenzenesulphamide

| No. | Preparation of | Death of viruses (%) at 30 minutes exposure | | Death of viruses (%) at 60 minutes exposure |
|---|---|---|---|---|
| | | Virus of hepatitis B | Virus of influenza A | Infectant of poliomyelitis |
| 1 | Example 4 | 100 | 100 | not studied |
| 2 | Example 5 | not studied | 100 | ditto |
| 3 | Example 6 | ditto | 100 | ditto |
| 4 | Example 7 | ditto | 100 | ditto |
| 5 | Example 8 | ditto | 100 | ditto |
| 6 | Example 9 | ditto | 78 | ditto |
| 7 | Example 10 | ditto | 87 | ditto |
| 8 | Example 11 | ditto | 74 | ditto |
| 9 | Example 12 | ditto | 85 | ditto |
| 10 | Example 13 | ditto | 90 | ditto |
| 11 | Example 14 | ditto | 90 | ditto |
| 12 | Example 15 | ditto | - | 40 |
| 13 | Example 16 | ditto | - | 60 |
| 14 | Example 17 | 100 | - | 80 |
| 15 | Known preparation | 50 | 25 | 25 |

comprised a 1% solution of the prepared compound in a 5% aqueous solution of glucose. The activity of the insecticidal preparation, according to the present invention, was tested on houseflies. To this end, into gauze boxes of 10x10 cm size (6 boxes) 50 - 60 houseflies of a 6 - 7 days'

age of mixed sexes were placed. Into five boxes Petri dishes with the insecticidal preparation of the present invention were placed. The observation of the flies death was effected after 48 - 72 hours. Into a control box a Petri dish with a 5% aqueous solution of glucose was placed. The study of the insecticidal activity of the preparation, according to the present invention, was effected in comparison with an insecticidal preparation based on 0,0--dimethyl-(1-hydroxy-2,2,2-trichlorethyl)phosphonate.

The activity of the insecticidal preparation of the present invention in respect of houseflies was tested in both home and production premises. Petri dishes with a 1% solution of the insecticidal preparation, according to the present invention, were placed at the rate of 2-3 dishes per 20 $m^2$ of the area. The preparation activity was assessed by counting the number of died insects after 72 hrs by means of tacky tapes, counting the number of flies on the tape before and after the test. The test results are shown in Table 3 hereinbelow.

Example 19

In a manner similar to that described in Example 1 hereinbefore 1-para-nitrophenyl-1,3-propanediolamidophosphoric acid was obtained. The compound exhibited an insecticidal activity. A preparation based thereon was tested as in Example 18. The test results are shown in Table 3.

Example 20

In a manner similar to that described in Example 20 1-para-nitrophenyl-1-chloro-3-propanolamidophosphoric acid was obtained. The compound exhibited an insecticidal activity. Tests of a preparation based thereon were carried out as described in Example 18. The test results are shown in Table 3 hereinbelow.

Example 21

In a manner similar to that of Example 3, 1-para-nitrophenyl-1,3-dichloropropanamidophosphoric acid was obtained. The compound exhibited an insecticidal activity. Tests of a preparation based thereon were conducted in a manner similar to that described in Example 18 hereinbefore. The test results are shown in Table 3 hereinbelow.

Example 22

In a manner similar to that described in Example 11, 1-para-nitrophenyl-1-chloro-3-propanolamidophosphoric acid dimethyl ether was prepared. The compound exhibited an insecticidal activity. A preparation based thereon was tested following a procedure similar to that described in Example 18. The results of these tests are shown in Table 3.

Example 23

In a manner similar to that described in Example 12, 1-para-nitrophenyl-1,3-dichloropropanamidophosphoric acid dimethyl ether was obtained. The compound showed an insecticidal activity. A preparation based thereon was tested in a manner similar to that described in Example 18 hereinbefore. The test results are shown in Table 3 hereinbelow.

Example 24

In a manner similar to that described in Example 13, 1-para-nitrophenyl-1-chloro-3-propanolamidophosphoric acid diethyl ether was obtained. The compound exhibited an insecticidal activity. A preparation based thereon was tested in a manner similar to that described in Example 18 hereinbefore. The test results are shown in Table 3 hereinbelow.

Example 25

In a manner similar to that of Example 14, 1-para-nitrophenyl-1,3-dichloropropanamidophosphoric acid diethyl ether was obtained. The compound exhibited an insecticidal activity. Tests of a preparation based thereon were carried out as in Example 18 hereinbefore. The test results are shown in Table 3 hereinbelow.

Table 3

Insecticidal Activity of the Preparation, According to the Present Invention, in Comparison with a Known Preparation Based on 0,0-Dimethyl-(1-hydroxy-2,2,2-trichloroethyl)-phosphonate

| No. | Preparation of | Concentration, % | Death of flies, % | |
|---|---|---|---|---|
| | | | Tests | |
| | | | laboratory | production |
| 1 | Example 18 | 1 | 67.7 | 66 |
| 2 | Example 19 | 2 | 100 | 100 |
| 3 | Example 20 | 2 | 100 | 100 |
| 4 | Example 21 | 2 | 100 | 100 |
| 5 | Example 22 | 1 | 72.7 | 73 |
| 6 | Example 23 | 1 | 71.4 | 70 |
| 7 | Example 24 | 1 | 99.6 | 98 |
| 8 | Example 25 | 1 | 100 | 100 |
| 9 | Known insecticidal preparation | 1 | 90 | 89 |

Example 26

To a solution of 0.01 mol of trichlorophosphazo-1-para--nitrophenyl-1,3-propanediol in 30 ml of benzrne a solution of 0.01 mol of anhydrous methanol and 0.01 mol of triethylamine in 20 ml of benzene were gradually added under continuous stirring. The reaction mixture was allowed to stand for 24 hours at the temperature of 20 °C. The precipitated triethylamine hydrochloride was sucked. Benzene was distilled-off in vacuum. To the residual thick liquid 0.02 mol of water in 20 ml of acetone were added and the mixture was allowed to stand for 24 hours at the temperature of 20 °C. As acetone got evaporated, the product precipitated as a crystalline mass which was filtered-off, washed with ethyl ether and crystallized from ethanol to give the desired

product, viz. 1-para-nitrophenyl-1,3-propanediolamidophosphoric acid methyl ether of the formula: para-$NO_2C_6H_4CHOHCH(CH_2OH)NHPO(OCH_3)OH$ comprising a yellow crystalline mass soluble in water, alcohols, acetone. The yield of the desired product was 87 % by mass. The melting temperature was 112 - 114 °C.

Found, %: C 43.33, H 5.36, N 7.39, P 7.98.

$C_{10}H_{15}N_2O_7P$.

Calculated, %: C 43.48, H 5.47, N 7.42, P 8.22.

IR-spectrum for NH 3.240 $cm^{-1}$, P=O 1,285 $cm^{-1}$.

The resulting compound exhibited an ovocidal activity. On the basis of this compound an ovocidal preparation was made which comprised a 3% aqueous solution of said compound. The ovocidal preparation, according to the present invention, was tested in disinfection of ambient objects (equipment, ware, hands). To this end, a 3% aqueous solution of the compound, according to the present invention, was used for the treatment of said ambient objects. The efficiency of the ovocidal action was determined by the number of ovi of helminths in washings from the ambient objects before and after the treatment with the ovocidal preparation.

As the test-object use was made of ovi of pig ascarid. A drop of a suspension containing at least 1,000 ovi of ascarids was placed on a watch glass, added with one drop of a 3% solution of the preparation, according to the present invention and put into a humid chamber in a thermostat at a temperature of 24 - 60 °C. After every 24 hours during 3 days the watch glasses with ascarid ovi with the preparation, according to the present invention, were withdrawn from the thermostat and washed with distilled water for 2-3 times. Thereafter, the washed ascarid ovi were cultured for 30 days at a temperature of 24 - 26 °C. To determine the number of dead and viable ovi, every 3-5 days 20 ovi were visualized in a microscope. Death was determined by the absence of the development of ovi for 30

days to the stage of a mobile larva and the presence of destructive morphological changes: shrinkage and deformation of the embryo, rupture of shells. The results of tests in comparison with a known preparation - carbathion - are shown in Table 4 hereinbelow.

Example 27

The process was conducted in a manner similar to that described in Example 26 hereinbefore.

As the starting compounds use was made of 0.01 mol of trichloriphosphazo-1-para-nitrophenyl-1-chloro-3-propanol, further steps were conducted as in Example 27. The resulting desired product was 1-para-nitrophenyl-1-chloro-3-propanolamidophosphoric acid methyl ether of the formula:

para-$NO_2C_6H_4CHOHCH(CH_2Cl)NHPO(OCH_3)OH$

comprising a yellow crystalline mass soluble in water, alcohols and acetone. The yield of the desired product was 80 % by mass. The melting temperature was 107 - 109 °C.

Found, %: C 36.81, H 4.31, Cl 11.12, N 7.00, P 7.90.

$C_{10}H_{14}ClN_2O_6P$.

Calculated, %: C 36.99, H 4.34, Cl 10.92, N 7.09, P 7.85. IR-spectrum for NH 3,265 $cm^{-1}$, P=O 1,285 $cm^{-1}$.

The compound exhibited an ovocidal activity. Tests of a preparation based thereon were effected following a procedure similar to that described in Example 26. The results of the tests are shown in Table 4 hereinbelow.

Example 28

The process was conducted as in the foregoing Example 26. As the starting compounds use was made of 0.01 ml of trichlorophosphazo-1-para-nitrophenyl-1,3-dichloropropane, further steps were as in Example 26. The thus-prepared desired product was 1-para-nitrophenyl-1,3-dichloropropanamidophosphoric acid methyl ether of the formula:

para-$NO_2C_6H_4CHClCH(CH_2Cl)NHPO(OCH_3)OH$

comprising a yellow crystalline mass soluble in water,

alcohols and acetone. The yield of the desired product was 81 % by mass. The melting temperature was 112 - 114 °C.

Found, %: C 34.86, H 3.82, Cl 20.55, N 6.84, P 7.41.

$C_{10}H_{13}Cl_2N_2O_5P$.

Calculated, %: C 35.00, H 3.81, Cl 20.66, N 6.76, P 7.50. IR-spectrum for NH 3,245 $cm^{-1}$, P=O 1,310 $cm^{-1}$.

The compound possessed an avocidal activity. A preparation based thereon was tested in a manner similar to that described in Example 26 hereinbefore. The test results are shown in Table 4 hereinbelow.

Example 29

The process was carried out as in Example 26. As the starting compounds use was made of 0.01 mol of trichlorophosphazo-1-para-nitrophenyl-1,3-propanediol and ethanol, further steps were as in Example 26. The resulting desired product was 1-para-nitrophenyl-1,3-propanediolamidophosphoric acid ethyl ether of the formula:

para-$NO_2C_6H_4CHOHCH(CH_2OH)NHPO(OC_2H_5)OH$

comprising a yellow crystalline mass soluble in water, alcohols and acetone. The yield of the desired product was 78 % by mass. The melting temperature was 107 - 109 °C.

Found, %: C 41.45, H 5.28, N 6.93, P 7.87.

$C_{11}H_{17}N_2O_7P$.

Calculated, %: C 41.42, H 5.35, N 7.16, P 7.92. IR-spectrum for NH 3,265 $cm^{-1}$, P=O 1,310 $cm^{-1}$.

The compound exhibited an ovocidal activity. A preparation based thereon was tested following a procedure similar to that described in the foregoing Example 26. The test results are shown in Table 4 hereinbelow.

Example 30

The process was conducted as in Example 26. As the starting compounds use was made of 0.01 mol of trichlorophosphazo-1-para-mitrophenyl-1-chloro-3-propanol and ethanol, further steps were as in Example 26. The resulting desired product was 1-para-nitrophenyl-1-chloro-3-propanolamidophosphoric acid ethyl ether of the formula:

para-$NO_2C_6H_4CHOHCH(CH_2Cl)NHPO(OC_2H_5)OH$

comprising a crystalline mass soluble in water, alcohols and acetone. The yield of the desired product was 76 % by mass. The melting temperature was 121 - 123 °C.

Found, %: C 38.85, H 4.61, Cl 10.33, N 6.66, P 7.49.

$C_{11}H_{16}ClN_2O_6P$.

Calculated, %: C 39.01, H 4.76, Cl 10.46, N 6.86, P 7.59. IR-spectrum for NH 3,245 $cm^{-1}$, P=O 1,270 $cm^{-1}$.

The compound exhibited an ovocidal activity. A preparation based thereon was tested following a procedure similar to that described in Example 26. The test results are shown in Table 4 hereinbelow.

Example 31

The process was conducted in a manner similar to that described in Example 26. As the starting compounds use was made of 0.01 mol of trichlorophosphazo-1-para-nitrophenyl-1,3-dichloropropane and ethanol, further steps were similar to those of Example 26. The thus-prepared desired product was 1-para-nitrophenyl-1,3-dichloropropanamidophosphoric acid ethyl ether of the formula:

para-$NO_2C_6H_4CHClCH(CH_2Cl)NHPO(OC_2H_5)OH$

comprising a yellow crystalline mass soluble in water, alcohols and acetone. The yield of the desired product was 79 % by mass. The melting temperature was 122 - 123 °C.

Found, %: C 37.12, H 3.53, Cl 19.77, N 6.68, P 7.05.

$C_{11}H_{15}Cl_2N_2O_5P$.

Calculated, %: C 36.99, H 3.66, Cl 19.85, N 6.54, P 7.25. IR-spectrum for NH 3,265 $cm^{-1}$, P=O 1,310 $cm^{-1}$.

The compound exhibited an ovocidal activity. A preparation based thereon was tested in a manner similar to that described in Example 26. The results of the tests are shown in Table 4 hereinbelow.

Example 32

The process was conducted as in Example 4 hereinbefore. As the starting compounds use was made of 1-para--nitrophenyl-1-hydroxy-3-chloroisopropylamidophosphoric acid dichloride. Further steps were similar to those of Example 4. The resulting desired product was di-[d-(-) threo-3-para-nitrophenyl-2-dichloracetamido-3-hydroxy--[propylether]-1-para-nitrophenyl-1-hydroxy]-3-chloroisopropylamidophosphoric acid of the formula:

$$\text{para-}NO_2C_6H_4CHOHCH(CH_2Cl)NHPO-\left[\begin{array}{l} \quad CHOHC_6H_4NO_2\text{-para} \\ \quad | \\ OCH_2CH \\ \quad | \\ \quad NHCOCHCl_2 \end{array}\right]$$

comprising a crystalline mass soluble in water, alcohols and acetone. The yield of the desired product was 81 % by mass. The melting temperature was 158 - 160 °C.

Found, %: C 40.37, H 3.41, Cl 19.16, N 8.97, P 3.15.

$C_{31}H_{32}Cl_5N_6O_{14}P$.

Calculated, %: C 40.43, H 3.50, Cl 19.24, N 9.12, P 3.36.
IR-spectrum for NH 3,442 $cm^{-1}$, P=O 1,290 $cm^{-1}$.

The compound exhibited an ovocidal activity. Tests of a preparation based thereon were carried out following a procedure similar to that described in Example 26 hereinbefore. The test results are shown in Table 4 hereinbelow.

Example 33

In a manner similar to that of Example 5, 1-para-nitrophenyl-1-hydroxy-3-chloroisopropylamidophosphoric acid diphenyl ether was prepared. The compound exhibited an ovocidal activity. A preparation based thereon was tested in a manner similar to that of Example 26. The test results are shown in Table 4 hereinbelow.

Example 34

In a manner similar to that of Example 6, 1-para-nitrophenyl-1,3-dichlorisopropylamidophosphoric acid diphenyl ether was prepared. The compound exhibited an ovocidal activity. Tests of a preparation based thereon were carried out as described in Example 26. The test results are shown in Table 4 hereinbelow.

Example 35

In a manner similar to that of Example 7, 1-para--nitrophenyl-1-hydroxy-3-chloroisopropylamidophosphoric acid dianilide was prepared. The compound exhibited an ovocidal activity. Tests of a preparation based thereon were carried out as in Example 26. The test results are shown in Table 4 hereinbelow.

Example 36

In a manner similar to that of Example 8, 1-para--nitrophenyl-1,3-dichloroisopropylamidophosphoric acid dianilide was prepared. The compound exhibited an ovocidal activity. Tests of a preparation based thereon were carried out as in Example 26. The test results are shown in Table 4 hereinbelow.

Example 37

In a manner similar to that described in Example 9, 1-para-nitrophenyl-1-chloro-3-propanol-2-amidophosphoric acid monoanilide was prepared. The compound exhibited an ovocidal activity. Tests of a preparation based thereon were carried out following a procedure similar to that of Example 26. The test results are shown in Table 4 hereinbelow.

Example 38

In a manner similar to that of Example 10 hereinbefore, 1-para-nitrophenyl-1,3-dichloropropane-2-amidophosphoric acid monoanilide was prepared. The compound demonstrated an ovocidal activity. Tests of a preparation based thereon were carried out as in Example 26. The results of these tests are shown in Table 4 hereinbelow.

Example 39

In a manner similar to that of Example 1, 1-para--nitrophenyl-1,3-propanediolamidophosphoric acid was obtained. The compound exhibited an ovocidal activity. A preparation produced therefrom was subjected to tests following a procedure similar to that described in Example 26 hereinbefore. The test results are shown in Table 4 hereinbelow.

Example 40

In a manner similar to that of Example 2, 1-para--nitrophenyl-1-chloro-3-propanolamidophosphoric acid was obtained. The compound exhibited an ovocidal activity. A preparation produced therefrom was tested as in Example 26. The results of the tests are shown in Table 4 hereinbelow.

Example 41

In a manner similar to that of Example 3, 1-para--nitrophenyl-1,3-dichloropropanamidophosphoric acid was prepared. The compound exhibited an ovocidal activity. Tests of a preparation produced therefrom were carried out following a procedure similar to that described in Example 26. The results of these tests are shown in the following Table 4.

Example 42

In a manner similar to that described in Example 26, 1-para-nitrophenyl-1,3-propanediolamidophosphoric acid methyl ether was prepared.

The resulting compound showed a virucidal and insecticidal activity. A virucidal preparation based thereon was tested like in Example 4 in respect of the virus of influenza, type A. The test results are shown in Table 5 hereinbelow. An insecticidal preparation based on said compound was tested in a manner similar to that described in Example 18 hereinbefore. The test results are shown in Table 6 hereinbelow.

Table 4

Ovocidal Activity of the Preparation of the Invention in Comparison with a Known Preparation and a Control

| No. | Preparation of | Death of ascarid ovi, % | |
|---|---|---|---|
| | | Tests | |
| | | laboratory | production |
| 1 | Example 26 | 100 | 99 |
| 2 | Example 27 | 100 | 98 |
| 3 | Example 28 | 100 | 100 |
| 4 | Example 29 | 100 | 97 |
| 5 | Example 30 | 100 | 99 |
| 6 | Example 31 | 100 | 98 |
| 7 | Example 32 | 100 | 100 |
| 8 | Example 33 | 100 | 100 |
| 9 | Example 34 | 100 | 100 |
| 10 | Example 35 | 100 | 100 |
| 11 | Example 36 | 100 | 100 |
| 12 | Example 37 | 100 | 100 |
| 13 | Example 38 | 100 | 100 |
| 14 | Example 39 | 100 | 100 |
| 15 | Example 40 | 100 | 100 |
| 16 | Example 41 | 100 | 100 |
| 17 | Known ovocidal preparation (carbathion) | 80 | 78 |

Example 43

In a manner similar to that described in Example 27, 1-para-nitrophenyl-1-chloro-3-propanolamidophosphoric acid methyl ether was ontained.

The thus-prepared compound exhibited a virucidal and insecticidal activity. A virucidal preparation based thereon was tested in respect of the virus of influenza, type A, following a procedure similar to that of Example 4. The test results are shown in Table 5. An insecticidal preparation based on said compound was tested like in Example 18. The results of these tests are shown in Table 6 hereinbelow.

Example 44

In a manner similar to that of Example 28 hereinbefore, 1-para-nitrophenyl-1,3-dichloropropanamidophosphoric acid methyl ether was obtained. The resulting compound exhibited a virucidal and insecticidal activity. Tests of a virucidal preparation based on the compound in respect of the virus of influenza, type A, were carried out as in Example 4. An insecticidal preparation also based on the above-mentioned compound was tested like in Example 18. The results of both tests are shown in Tables 5 and 6, respectively.

Example 45

In a manner similar to that described in Example 29, 1-para-nitrophenyl-1,3-propanediolamidophosphoric acid ethyl ether was obtained. The resulting compound exhibited both virucidal and insecticidal activity. Tests of a virucidal preparation based thereon were conducted in respect of the virus of influenza, type A, following a procedure similar to that described in Example 4. The test results are shown in Table 5. An insecticidal preparation also based on the above-mentioned compound was tested like in Example 18. The test results are shown in Table 6.

Example 46

In a manner similar to that of Example 30, 1-para-nitrophenyl-1-chloro-3-propanolamidophosphoric acid ethyl ether was prepared. The resulting compound exhibited virucidal and insecticidal activity. Tests of a virucidal preparation based thereon were conducted in respect of the virus of influenza, type A, as in Example 4. The test results are shown in Table 5. Tests of an insecticidal preparation based on this compound were carried out as in Example 18. The test results are shown in Table 6 hereinbelow.

Example 47

In a manner similar to that described in Example 31, 1-para-nitrophenyl-1,3-dichloropropanamidophosphoric acid ethyl ether was prepared. The resulting compound possessed virucidal preparation based thereon were carried out as in Example 4. The test results are shown in Table 5. Tests of an insecticidal preparation also based thereon were carried out following a procedure similar to that described in Example 18 hereinbefore. The test results are shown in Table 6 hereinbelow.

Examples 48-51

In a manner similar to that described in Examples 11 to 14 hereinbefore, the following compounds were obtained: 1-para-nitrophenyl-1-chloro-3-propanolamidophosphoric acid dimethyl ether; 1-para-nitrophenyl-1,3-dichloropropanamidophosphoric acid dimethyl ether; 1-para-nitrophenyl-1-chloro-3-propanolamidophosphoric acid diethylether; 1-para-nitrophenyl-1,3-dichloropropanamidophosphoric acid diethyl ether. The resulting compounds exhibited an ovocidal activity. Tests of ovocidal preparations based on these compounds were carried out in a manner similar to that described in Example 26 hereinbefore. The results of these tests are shown in the following Table 7.

Table 5

Virucidal Activity of the Preparation of the Invention as Compared to the Known Preparation Based on Sodium N-Chlorobenzenesulphamide

| No. | Preparation of | Concentration, % by mass | Virucidal activity of the preparation in respect of the virus of influenza, type A, % |
|---|---|---|---|
| 1 | Example 42 | 1<br>2 | 86<br>88.6 |
| 2 | Example 43 | 1<br>2 | 70.3<br>74 |
| 3 | Example 44 | 1<br>2 | 89.1<br>94 |
| 4 | Example 45 | 1<br>2 | 83.3<br>86.7 |
| 5 | Example 46 | 1<br>2 | 71.2<br>79 |
| 6 | Example 47 | 1<br>2 | 36.9<br>46.9 |
| 7 | Known preparation based on sodium N-chlorobenzenesulphamide | 1<br>2 | 22<br>28 |

Table 6

Insecticidal Activity of the Preparation of the Invention as Compared to the Known Preparation Based on O,O-Dimethyl-(1-Hydroxy-2,2,2-Trichloroethyl)-Phosphonate

| No. | Preparation of | Concentration, % by mass | Death of flies, % | |
|---|---|---|---|---|
| | | | after 48 hours | after 72 hours |
| 1 | Example 42 | 2 | 46 | 94.2 |
| 2 | Example 43 | 2 | 36.4 | 70 |
| 3 | Example 44 | 2 | 54 | 89.1 |
| 4 | Example 45 | 2 | 56 | 92.3 |
| 5 | Example 46 | 2 | 42.8 | 94 |
| 6 | Example 47 | 2 | 44.2 | 91.3 |
| 7 | Known preparation | 2 | 81 | 84 |

Table 7

Ovocidal Activity of the Preparation, According to the Present Invention as Compared to the Known Preparation - Carbathione

| No. | Preparation of | Concentration, % by mass | Death of ascarid ovi, % | | |
|---|---|---|---|---|---|
| | | | after 24 hrs | after 48 hours | after 72 hours |
| 1 | Example 48 | 3 | 100 | 100 | 100 |
| 2 | Example 49 | 3 | 100 | 100 | 100 |
| 3 | Example 50 | 3 | 100 | 100 | 100 |
| 4 | Example 51 | 3 | 100 | 100 | 100 |
| 5 | Known preparation - carbathione | 3 | 100 | 100 | - |

Examples 52-53

In a manner similar to that described in Examples 7 and 8 hereinbefore, the following compounds were prepared, viz. 1-para-nitrophenyl-1-hydroxy-3-chloroisopropylamidophosphoric acid dianilide and 1-para-nitrophenyl-1,3-dichloroisopropylamidophosphoric acid dianilide. The resulting compounds exhibited an insecticidal activity. Tests of an insecticidal preparation produced on the basis of these compounds were carried out following a procedure similar to that described in Example 18 hereinbefore. The results of these tests are shown in Table 8 hereinbelow.

Examples 54-55

In a manner similar to that of Examples 9 and 10 hereinbefore, the following compounds were prepared, viz. 1-para-nitrophenyl-1-chloro-3-propanol-2-amidophosphoric acid monoanilide and 1-para-nitrophenyl-1,3-dichloropropane-2-amidophosphoric acid monoanilide. The resulting compounds exhibited an insecticidal activity.

Tests of an insecticidal preparation produced from these compounds were carried out in a manner similar to that described in Example 18. The results of these tests are shown in Table 8 hereinbelow.

Examples 56-57

In a manner similar to that described in Examples 5 and 6 hereinbefore, 1-para-nitrophenyl-1-hydroxy-3--chloroisopropylamidophosphoric acid diphenyl ether and 1-para-nitrophenyl-1,3-dichloroisopropylamidophosphoric acid diphenyl rther were obtained. The resulting compounds exhibited an insecticidal activity. Tests of a preparation produced from these compounds for its insecticidal activity were carried out in a manner similar to that described in Example 18 hereinbefore. The test results are shown in the following Table 8.

Table 8

Insecticidal Activity of the Preparation of the Invention as Compared to a Known Preparation Based on O,O--Dimethyl-(1-Hydroxy-2,2,2-Trichlorethyl)-Phosphonate

| No. | Preparation of | Concentration, % by mass | Death of flies, % | |
|---|---|---|---|---|
| | | | after 24 hours | after 72 hours |
| 1 | Example 52 | 3 | 55.1 | 94 |
| 2 | Example 53 | 3 | 66.4 | 98 |
| 3 | Example 54 | 3 | 65 | 96 |
| 4 | Example 55 | 3 | 77 | 99 |
| 5 | Example 56 | 3 | 35.4 | 96 |
| 6 | Example 57 | 3 | 64.7 | 98.6 |
| 7 | Known preparation | 3 | 86 | 92 |

Example 58

To a solution of 0.01 mol of trichlorophosphazo-1--para-nitrophenyl-1-chloro-3-propanol in 20 ml of benzene under continuous stirring 0.01 mol of phenol and 0.01 mol of triethylamine in 20 ml of benzene were added. The reaction mixture was allowed to stand for 24 hours at the temperature of 20 °C. The precipitated triethylamine hydrochloride was filtered-off. Benzene was distilled in vacuum. The residual product in the form of a crystalline mass was sucked, washed with ether, dried and crystallized from ethanol to give the desired product, viz. 1-para-nitrophenyl-1-chloro-3-propanol-2-amidophosphoric acid monophenyl ether.

The yield of the desired product was 77 % by mass. The melting point was 110 - 112 °C.

Found, %: C 46.43, H 4.10, Cl 9.09, N 7.00, P 8.23.

$C_{15}H_{16}ClN_2O_6P$.

Calculated, %: C 46.58, H 4.17, Cl 9.16, N 7.24, P 8.00. IR-spectrum for P=O 1,200 $cm^{-1}$, NH 3,450 $cm^{-1}$.

The resulting compound exhibited a virucidal, insecticidal and ovocidal activity. Tests of a virucidal preparation produced therefrom were carried out as in Example 4. The test results are shown in Table 9. An insecticidal preparation produced from this compound was tested as in Example 18 hereinbefore. The test results are shown in Table 10. An ovocidal preparation based on the above-mentioned compound was tested in a manner similar to that described in Example 26 hereinbefore. The results of these tests are shown in Table 11 hereinbelow.

Example 59

In a manner similar to that described in the foregoing Example 58, 1-para-nitrophenyl-1,3-dichloropropane--2-amidophosphoric acid monophenyl ether was obtained.

The yield of the desired product was 79 % by mass. The melting temperature was 122 - 123 °C.

Found, %: C 44.57, H 3.86, Cl 17.28, N 6.64, P 7.23.

$C_{15}H_{15}Cl_2N_2O_5P$.

Calculated, %: C 44.46, H 3.73, Cl 17.50, N 6.90, P 7.65. IR-spectrum for P=O 1,210 $cm^{-1}$, NH 3,470 $cm^{-1}$.

The resulting compound exhibited a virucidal, insecticidal and ovocidal activity. Tests of a virucidal preparation based thereon were carried out like in Example 14. The test results are shown in Table 9. An insecticidal preparation based on the above-mentioned compound was tested as in Example 18 hereinbefore. The test results are shown in Table 10. Tests of an ovocidal preparation also based on this compound were carried out in a manner similar to that described in Example 26 hereinbefore. The test results are shown in Table 11 hereinbelow.

Table 9

Virucidal Activity of the Preparation, According to the Present Invention, as Compared to a Known Preparation Based on Sodium N-Chlorobenzenesulphamide

| No. | Preparation of | Concentration, % by mass | Virucidal activity of the preparation in respect of the virus of influenza, type A, % |
|---|---|---|---|
| 1 | Example 58 | 1 | 83.4 |
| | | 2 | 86 |
| 2 | Example 59 | 1 | 92.3 |
| | | 2 | 96.1 |
| 3 | Known preparation | 1 | 22 |
| | | 2 | 28 |

Table 10.

Insecticidal Activity of the Preparation, According to the Present Invention, as Compared to a Known Preparation Based on O,O-Dimethyl-(1-Hydroxy-2,2,2-Trichloroethyl)-Phosphonate

| No. | Preparation of | Concentration, % by mass | Death of flies, % | |
|---|---|---|---|---|
| | | | after 48 hours | after 72 hours |
| 1 | Example 58 | 2 | 72 | 99 |
| 2 | Example 59 | 2 | 60 | 91.2 |
| 3 | Known preparation | 2 | 81 | 84 |

Table 11

Ovocidal Activity of the Preparation, According to the Present Invention, in Comparison with a Known Preparation - Carbathione

| No. | Preparation of | Concentration, % by mass | Death of ascarid ovi, % | |
|---|---|---|---|---|
| | | | after 24 hours | after 48 hours |
| 1 | Example 58 | 2 | 95.4 | 100 |
| 2 | Example 59 | 2 | 91.8 | 100 |
| 3 | Known preparation - carbathione | 2 | 60 | 80 |

Examples 60-62

In a manner similar to that described in Examples 1 to 3, the following compounds were obtained: 1-para-nitrophenyl-1,3-propanediolamidophosphoric acid; 1-para-nitrophenyl-1-chloro-3-propanolamidophosphoric acid; 1-para-nitrophenyl-1,3-dichloropropanamidophosphoric acid. These compounds exhibited a fungicidal activity. Tests of a fungicidal preparation based on these compounds were carried out in the following manner.

A fungicidal activity of the preparation, according to the present invention, was determined by the method of inhibition of the growth of mycelium of pure cultures of phytopathogenic fungi: Alternaria radicina, Aspergillus niger, Fusarium oxysporum, Helminthosporum saturem, Venturia inaequalis, Penicillium sporum.

Into a molten agar the preparation, according to the present invention, was introduced in the concentration of 0.05 % by mass, stirred and poured into Petri dishes. After congelation, disks of a filtering paper (diameter 6 mm) were placed onto the agar surface inoculated with a suspension of spores of the above-mentioned cultures. After an exposure for 70 hours at the temperature of 25 °C, the diameter of fungal colonies was measured and the growth of mycelium was calculated in percent to a control (culturing without the addition of a preparation, according to the present invention). The test results are shown in Table 15.

A fungicidal activity of the preparation, according to the present invention, was determined in respect of yeast-like fungi Candida albicans and Candida tropicalis. To this end, to 48-hours' aged cultures of the fungi grown on a liquid Saburo medium, the preparation, according to the present invention, was added in the concentration of 0.05 % by mass. After an exposure for 2 and 20 hours respectively at a temperature of from 30 to 36 °C metered inoculations were made onto a solid Saburo medium, incubation was effected for 48 hours at the temperature of 36 °C and then the number of grown colonies was calculated relative to a control (culturing without adding the preparation, according to the present invention). The test results are shown in Table 16 hereinbelow. The study of a fungicidal activity were carried out in comparison with a known preparation based on 2,3-dichloronaphthoquinone (Phygon).

A fungicidal activity of the preparation, according to the present invention was also studied under field

conditions. To this end, on plots of 2 $m^2$ potatoes infected with Fusarium oxysporum, Fusarium culmorum, Rhyzoctonia violaceae and Rhyzoctonia aderholdii were sprinkled with the preparation, according to the present invention, in the concentration of 0.1 % by mass at the rate of 20 ml per 1 $m^2$ of the area. The sprinkling was also effected for injured rice grain at the rate of 10 ml per 100 g of the grain. After an exposure of 1 hour the percent of death of the fungi was determined by inoculation of the employed material into dishes with a Saburo medium. The results of the thus-performed tests are shown in Table 17 hereinbelow.

Table 15

Fungicidal Activity of the Preparation, According to the Present Invention, in Comparison with the Known Preparation - Phygon

| No. | Preparation of | Concentration, % by mass | Mycelium growth inhibition, % to the control | | |
|---|---|---|---|---|---|
| | | | Alternaria radicina | Aspergillus niger | Fusarium oxisporum |
| 1 | 2 | 3 | 4 | 5 | 6 |
| 1 | Example 60 | 0.05 | 75 | 99 | 68 |
| 2 | Example 61 | 0.05 | 60 | 100 | 69 |
| 3 | Example 62 | 0.05 | 80 | 100 | 68 |
| 4 | Phygon | 0.05 | 94 | 100 | 58 |

Table 12 (continued)

| No. | Mycelium growth inhibition, % to the control | | |
|---|---|---|---|
| | Helminthosporum saturem | Venturia inaequalis | Penicillium sporum |
| 1 | 7 | 8 | 9 |
| 1 | 54 | 32 | 58 |
| 2 | 88 | 64 | 68 |
| 3 | 100 | 98 | 100 |
| 4 | 92 | 98 | 100 |

Table 16

Fungicidal Activity of the Preparation of the Invention in Respect of Yeast-Like Fungi

| No. | Preparation of | Concentration, % by mass | Death of test fungi, % to the control | | | |
|---|---|---|---|---|---|---|
| | | | Candida albicans | | Candida tropicalis | |
| | | | 2 hrs | 20 hrs | 2 hrs | 20 hrs |
| 1 | Example 60 | 0.05 | 98 | 100 | 96 | 100 |
| 2 | Example 61 | 0.05 | 99 | 100 | 90 | 100 |
| 3 | Example 62 | 0.05 | 100 | 100 | 99 | 100 |
| 4 | Phygon | 0.05 | 68 | 100 | 76 | 100 |

Table 17

Fungicidal Activity of the Preparation of the Invention as Compared to a Known Preparation (Phygon) under Field Conditions

| No. | Preparation of | Inhibition of the growth of colonies of phytopathogenic fungi, % | | | | | | | |
|---|---|---|---|---|---|---|---|---|---|
| | | Fusarium oxysporum | | Fusarium culmorum | | Rhyzoctonia violaceae | | Rhyzoctonia aderholdii | |
| | | Potato | Rice | Potato | Rice | Potato | Rice | Potato | Rice |
| 1 | Example 60 | 54 | 80 | 66 | 79 | 70 | 86 | 69 | 88 |
| 2 | Example 61 | 63 | 87 | 70 | 81 | 68 | 88 | 63 | 83 |
| 3 | Example 62 | 70 | 92 | 80 | | 63 | 90 | 73 | 95 |
| 4 | Phygon | 34 | 53 | 41 | 59 | 56 | 74 | 55 | 76 |
| 5 | Control | 0 | 0 | 0 | 0 | 0 | 0 | 0 | 0 |

CLAIMS:

1. Derivatives of amidophosphoric acid dichlorides of the general formula:

para-$NO_2C_6H_4CHXCH(CH_2X')NHPO(R)R'$,

wherein X and X' are each hydroxy or chlorine;

R and R' = OH, $OCH_3$, $OC_6H_5$,

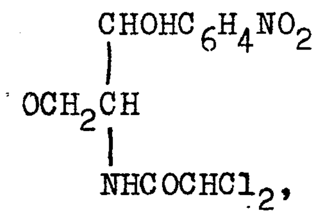, $NHC_6H_5$,

where at R = $OCH_3$, $OC_2H_5$, $OC_6H_5$, R' is OH.

2. A bactericidal preparation comprising an active principle and a solvent, characterized in that as the active principle it incorporates derivatives of amidophosphoric acid dichlorides of the general formula:

para-$NO_2C_6H_4CHXCH(CH_2X')NHPO(R)R'$,

wherein X and X' are each hydroxy or chlorine, according to Claim 1, R = R' = OH.

3. A bactericidal preparation according to Claim 2, characterized in that it incorporates the active principle in the amount of 0.5 % by mass.

4. A bactericidal preparation according to Claim 2, characterized in that as the solvent it incorporates water.

5. A virucidal preparation comprising an active principle and a solvent, characterized in that as the active principle it incorporates derivatives of amidophosphoric acid dichlorides of the general formula:

para-$NO_2C_6H_4CHXCH(CH_2C')NHPO(R)R'$,

wherein X and X' are each hydroxy or chlorine;

R and R' are each OH, $OCH_3$, $OC_2H_5$, $OC_6H_5$,

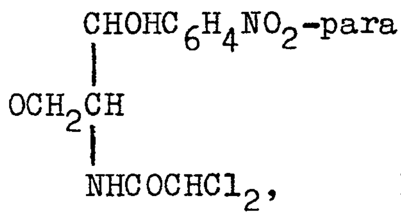

$NHC_6H_5$;

where at R = $NHC_6H_5$, $OC_6H_5$, R = OH, according to Claim 1.

6. A virucidal preparation according to Claim 5, c h a r a c t e r i z e d in that it contains the active principle in an amount of 1 - 2 % by mass.

7. A virucidal preparation according to Claim 5, c h a r a c t e r i z e d in that as the solvent it contains a 0.85% solution of sodium chloride.

8. An insecticidal preparation comprising an active principle and a solvent, c h a r a c t e r i z e d in that as the active principle it contains derivatives of amidophosphoric acid dichlorides of the general formula:

$$para\text{-}NO_2C_6H_4CHXCH(CH_2X')NHPO(R)R',$$

wherein X and X' are each hydroxyl or chlorine;

$$R = R' = OH,\ OCH_3,\ OC_2H_5,\ OC_6H_5,\ NHC_6H_5,$$

where at R = $OC_6H_5$, R' = OH according to Claim 1.

9. An insecticidal preparation according to Claim 8, c h a r a c t e r i z e d in that it contains the active principle in an amount of from 1 to 3 % by mass.

10. An insecticidal preparation according to Claim 8, c h a r a c t e r i z e d in that as the solvent it contains a 5% aqueous solution of saccharose or glucose.

11. An ovocidal preparation comprising an active principle and a solvent, c h a r a c t e r i z e d in that as the active principle it incorporates derivatives of amidophosphoric acid dichlorides of the general formula:

$$para\text{-}NO_2C_6H_4CHXCH(CH_2X)NHPO(R)R',$$

wherein X and X' are each hydroxy or chlorine;

$$R = R' = OH,\ OCH_3,$$

$OC_2H_5$, 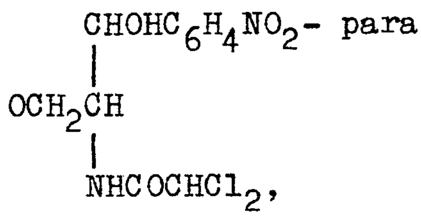

wherein at R = $OCH_3$, $OC_2H_5$, $OC_6H_5$, $NHC_6H_5$,

R' = OH according to Claim 1.

12\. An ovocidal preparation according to Claim 11, characterized in that it contains the active principle in the amount of 3 % by mass.

13\. An ovocidal preparation according to Claim 11, characterized in that it contains water as the solvent.

14\. A fungicidal preparation comprising an active principle and a solvent, characterized in that as the active principle it incorporates derivatives of amidophosphoric acid dichlorides of the general formula:

$$para\text{-}NO_2C_6H_4CHXCH(CH_2X')NHPO(R)R',$$

wherein X and X' are each hydroxy or chlorine;

R = R' = OH.

15\. A fungicidal preparation according to Claim 14, characterized in that it incorporates the active principle in an amount of from 0.05 to 0.1 % by mass.

16\. A fungicidal preparation according to Claim 14, characterized in that it contains water as the solvent.

# INTERNATIONAL SEARCH REPORT

International Application No PCT/SU 89/000013

**I. CLASSIFICATION OF SUBJECT MATTER** (if several classification symbols apply, indicate all) [6]

According to International Patent Classification (IPC) or to both National Classification and IPC

Int.Cl.[5] C07F 9/24, 9/22, A01N 57/30, A61K 31/675, A61L 2/16

**II. FIELDS SEARCHED**

Minimum Documentation Searched [7]

| Classification System | Classification Symbols |
|---|---|
| Int.Cl.[4] | C07F 9/22, 9/24, A01N 57/30, A61K 31/675, A61L 2/16, A61L 2/18 |

Documentation Searched other than Minimum Documentation to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| Y | Fiziologicheski aktivnye veschestva, sbornik, vyp. 12, 1980, Naukova dumka, (Kiev), T.N. Kudrya et al. "Fosforilirovannye proizvodnye 1-(n-nitrofenil)-2-amino-1,3-propandiola(d,1 treo-formy) i ikh fiziologicheskaya aktivnost", see pages 22-24 | 1,8 |
| Y | SU, A1, 751031 (Institut organicheskoi khimii AN Ukrainskoi SSR), 23 June 1982 (23.06.82) | 8-10 |
| A | GB, B, 1342231 (BAYER AKTIENGESELLSCHAFT), 03 January 1974 (03.01.74) see pages 7-10, claims 26,27,36-38 | 8-10 |
| A | GB, B, 1421520 (SHELL INTERNATIONALE RESEARCH MAATSCHAPPIJ B.V.), 21 January 1976 (21.01.76) see pages 1,2 | 11-13 |
| A | EP, A1, 0060474 (BAYER AG) 22 September 1982 (22.09.82) .../. | 2-7,11-16 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 19 September 1989 (19.09.89) | 12 October 1989 (12.10.89) |
| **International Searching Authority** | **Signature of Authorized Officer** |
| ISA/SU | |

III. DOCUMENTS CONSIDERED TO BE RELEVANT (CONTINUED FROM THE SECOND SHEET)

| Category * | Citation of Document, with indication, where appropriate, of the relevant passages | Relevant to Claim No |
|---|---|---|
| | see pages 17, claims 7,8 | |
| A | N.P. Melnikov "Khimia i tekhnologia pestitsidov", 1974, Khimia (Moscow), see pages 343,436,568 | 14-16 |

---